# EUROPEAN PATENT SPECIFICATION

(11) **EP 1 477 341 B1**
(45) Date of publication and mention of the grant of the patent: **10.12.2008**
(21) Application number: 04010045.5
(22) Date of filing: 28.04.2004
(51) Int. Cl.: B60G 15/06

(54) **Upper mount assembly for a suspension damper**
Obere Befestigungsvorrichtung für einen Aufhängungsdämpfer
Ensemble de montage supérieure pour un amortisseur de suspension

(30) Priority: 14.05.2003 IT TO20030350
(43) Date of publication of application: 17.11.2004
(73) Proprietor: FIAT AUTO S.p.A., 10135 Torino (IT)
(72) Inventor: Rostagno Idi, Luigi, 10084 Forno Canavese (Torino) (IT); Kraemer, Georg, 65428 Russelhaim (DE); Martina, Bruno, 10156 Torino (IT)
(74) Representative: Di Francesco, Gianni

(56) References cited:
- DE-A- 3 716 099
- DE-A- 10 018 058
- US-A- 4 604 797

## Description

The present invention refers to the telescoping and bouncing pieces of the suspensions of motor-vehicles of the McPherson type and more in particular to the kind of engagement between the piece and the dome made in the bodywork.

DE 10018058 discloses an assembly aid comprising a base body which temporarily connects the stent to the body. The base body is detachable once the stent is fitted.

Engagement between the telescoping pieces and the dome of the bodywork causes problems when the same kind of suspension is used on bodyworks of two different motor-vehicles which, according to their design, have domes of different shape.

So-called "dual path" engagements are currently employed. A double engagement allows to use the suspension on two different bodyworks without having to modify any part, so that the engagement is achieved almost automatically. However, said dual path systems are quite expensive as far as production and mounting are concerned.

It is an object of the present invention to provide an engagement system of a telescoping and bouncing piece of a suspension for motor-vehicles that avoids said drawbacks.

This object is achieved by means of the present invention relating to an engagement system for the telescoping and bouncing piece of a suspension for motor-vehicles presenting the characteristics of claim 1.

Additional characteristics and advantages will become more clear from the following description provided as non-restrictive example and referring to the appended drawings in which:

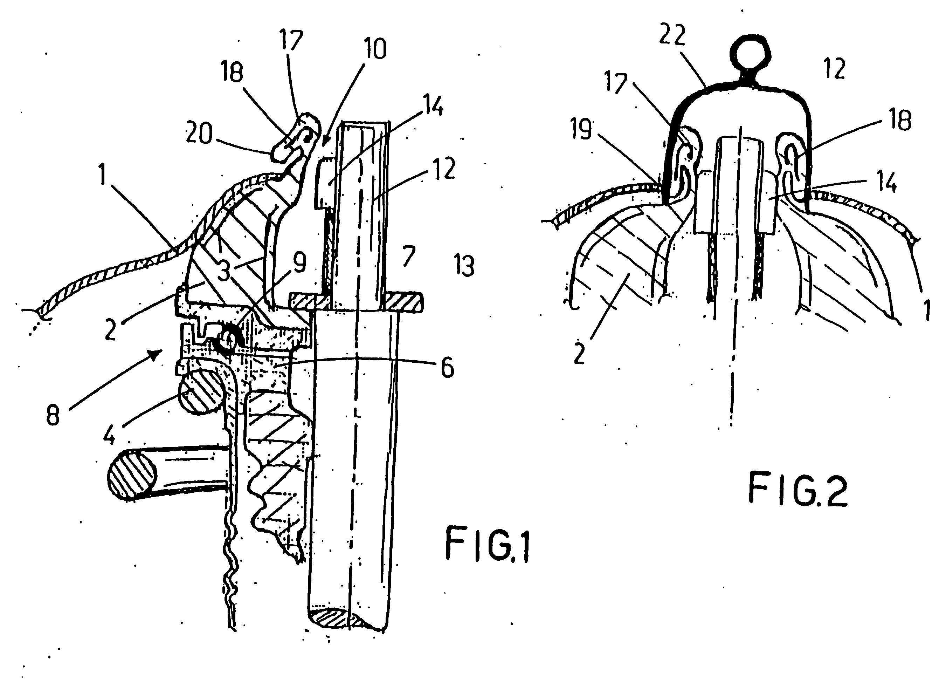

figure 1 is a section view of a piece according to the invention, and
figure 2 is a view of the piece of figure 1 provided with means adapted to locate it in the dome of the motor-vehicle.

With reference to the figures, reference number 1 indicates the dome in the bodywork of a motor-vehicle.

In it a telescoping and bouncing rubber piece 2 is to be fixed, the piece presenting metal insertions 3 and being part of suspensions of the McPherson type, that use a damper inserted into a spring 4 adapted to elastically support the motor-vehicle. The spring rests on the lower fifth wheel 6 of the fifth wheels 6 and 7 of a ball bearing 9. On the other fifth wheel 7 there is vulcanised the piece 2 shaped as a cup made of solid rubber, reversed and provided with an axial through hole 10. By means of said hole 10, the piece is inserted on the end of the stem 12 of the damper and is rigidly connected to it together with the ring 7 of the bearing 8, by means of a washer 13 which is kept in its position by a bolt 14 screwed on the threaded end of the stem 12. The upper end of the piece is provided with a folded neck serving as a sort of circular hook. Inside the folding there is buried a metal core shaped as a flat spring 18 that allows the folding of the neck 17 to be rigid and elastic.

When the piece 2 is in its working position, the neck 17 protrudes internally from the coaxial hole 19, normally made in the dome in order to fix the stem of the damper. The part of the neck protruding from the hole 19 serves as damper for the bouncing of the suspension, since the piece 2 can slide coming out from said hole until the edge 20 of the neck touches the external surface of the dome 1 and stops elastically thanks to the core buried in it.

The insertion of the piece in its working position can be achieved also by means of a tank 22 made of elastic material which compresses the neck 17 and allows it to be inserted into the hole 19. Once the piece has reached its final position, the tank 22 can be withdrawn pulling it upward, and the neck, thus released, expands and prevents the piece to come out from the hole where it has been inserted.

## Claims

1. A system to achieve engagement between the dome of the bodywork of a motor-vehicle and a rubber telescoping and bouncing piece of a suspension of the McPherson type where the spring and the damper are basically coaxial, and consisting of a solid rubber reversed cup (2) provided with a through hole (10) intended for insertion on the stem (12) of the damper, and fixed to one of the fifth wheels of a roll bearing (8) on the other fifth wheel of which (6) rests the spring (4) of the suspension, **characterised in that** it consists of a folded neck (17) made integral to the end of the piece which is not resting on the fifth wheel of the bearing and is adapted to be inserted into a hole (19) made in the dome of the bodywork of the motor-vehicle.

2. A system as claimed in claim 1, **characterised in that** a metal core, i.e. a flat spring, is buried inside the folding.

3. A system as claimed in claim 1, **characterised in that** the neck can be elastically compressed in order to be inserted into the hole (19) on the bodywork.

## Patentansprüche

1. System zum Erreichen eines Eingriffs zwischen dem Dom des Aufbaus eines Kraftfahrzeugs und einem Gummi-Teleskop- und -Rückprallteil einer McPherson-Aufhängung, bei der die Feder und das Dämpfungselement im Wesentlichen koaxial sind, und das aus einem massiven umgedrehten Gummibecher (2) besteht, der mit einem Durchgangsloch (10), das zum Einsetzen auf dem Schaft (12) des Dämpfers vorgesehen ist, versehen und an einer der Sattelplatten eines Walzenlagers (8) befestigt ist, auf deren anderer Sattelplatte (6) die Feder (4) der Aufhängung aufliegt, **dadurch gekennzeichnet, dass** es aus einem gefalteten Stutzen (17) besteht, der mit dem Ende des Teils integral hergestellt ist, das nicht auf der Sattelplatte des Lagers aufliegt und dafür eingerichtet ist, in ein Loch (19) eingesetzt zu werden, das in dem Dom des Aufbaus des Kraftfahrzeugs hergestellt ist.

2. System nach Anspruch 1, **dadurch gekennzeichnet, dass** ein Metallkern, d.h., eine Blattfeder, innerhalb der Faltung verborgen ist.

3. System nach Anspruch 1, **dadurch gekennzeichnet, dass** der Hals elastisch zusammengedrückt werden kann, um in das Loch (19) an dem Aufbau eingesetzt zu werden.

## Revendications

1. Système destiné à réaliser un engagement entre le dôme du châssis d'un véhicule à moteur et une partie télescopique et rebondissante en caoutchouc d'une suspension du type MacPherson où le ressort et l'amortisseur sont fondamentalement coaxiaux et consistant en une coupelle renversée en caoutchouc massif (2) dotée d'un trou traversant (10) destiné à son insertion sur la tige (12) de l'amortisseur, et fixée à l'une des sellettes d'accouplement d'un palier à rouleaux (8), le ressort (4) de la suspension reposant sur l'autre (6) des sellettes d'accouplement de celui-ci, **caractérisé en ce qu'**il consiste en un rebord plié (17) réalisé de manière solidaire de l'extrémité de la pièce qui ne repose pas sur la sellette d'accouplement du palier et est conçu pour être inséré dans un trou (19) réalisé dans le dôme du châssis du véhicule à moteur.

2. Système selon la revendication 1, **caractérisé en ce qu'**une pièce centrale en métal, en particulier un ressort à lame, est noyée à l'intérieur du pliage.

3. Système selon la revendication 1, **caractérisé en ce que** le rebord peut être compressé élastiquement de manière à être inséré à l'intérieur du trou (19) réalisé sur le châssis.
